# EUROPEAN PATENT APPLICATION

(11) **EP 4 725 582 A1**
(43) Date of publication of application: **15.04.2026**
(21) Application number: 24205755.2
(22) Date of filing: 10.10.2024
(51) Int. Cl.: B01D 39/16, B01D 46/00

(54) **MATERIAL FOR A FILTER MEDIUM AND FILTER COMPRISING SAID MATERIAL FOR A FILTER MEDIUM**

(71) Applicant: Carl Freudenberg KG, 69469 Weinheim (DE)
(72) Inventor: Christmann, Marcel, 67734 Katzweiler (DE); Hirsch, Georg, 76698 Ubstadt- Weiher (DE); Hund, David, 67434 Neustadt Weinstraße (DE); Kurzer, Rosemarie, 54472 Burgen (DE); Reid, Christian, 69221 Dossenheim (DE); Staudenmayer, Oliver, 69469 Weinheim (DE); Geiss, Franka, 69509 Mörlenbach (DE)

(57) **Abstract**

A material for a filter medium is provided which comprises at least a first material layer comprising fibers and having a first surface and a second surface, and which comprising a second material layer comprising fibers and having a first surface and a second surface, wherein the first surface of the second material layer is oriented parallel to the second surface of the first material layer, wherein the first material layer comprises a mixture of meltblown filaments and fibers having a discrete length, wherein the concentration of meltblown filaments increases from the first surface to the second surface of the first material layer and the concentration of fibers having a discrete length increases from the second surface to the first surface of the first material layer, and wherein the second material layer comprises nanofibers forming the first surface of the second material layer.

## Description

The application pertains to a material for a filter medium, to a filter medium comprising said material for a filter medium and to a filter element comprising said filter medium.

Fluid streams, such as an air stream or other gas streams, may contain particulate material therein, such as for example dust particles or soot particles. For example, air intake streams into the cabins of motorized vehicles, or air intake streams into heating, ventilation and air conditioning equipment may contain particulate material.

The removal of some or (almost) all of the particulate material from the fluid stream is desired in many applications. Cabin air filters are for example used to remove particulate matter from incoming air for comfort of the passengers in the cabin of a vehicle.

Particulate material contained in a fluid stream may also cause damage to internal parts of certain processing equipment. The removal of some or (almost) all of the particulate material from such fluid streams is desired before the fluid stream enters the processing equipment.

Fluid streams, e.g. gases, formed in industrial processes may also contain particulate material. The removal of some or (almost) all of the particulate material from such fluid streams is desired before the fluid stream is released into the atmosphere.

Filter media having higher efficiency and having a longer service life are sought after to obtain clean streams of air or of other gases, or of other fluids. A low pressure drop over the filter medium is desired to have little restriction to fluid flow, for example of air or of other gases.

A long service life of a filter medium in a filter element is desired to reduce the maintenance costs and filter costs of the filter element, which is often a challenge for high efficiency filter media.

US 11,161,070 B2 discloses a filter medium which comprises a surface loading filter layer including fibers having an average diameter of less than 1 micron, a depth loading layer, and a support layer. The depth loading filter layer includes a glass-containing filter layer, a melt-blown filter layer, or a combination thereof. The surface loading filter layer comprising fine fibers is positioned as the first layer encountered by the gas stream being filtered, which however can become easily blocked by particles.

US 8,679,218 B2 discloses filter media comprising a first layer comprising a first phase composed of at least a first plurality of fibers and a second plurality of fibers and a second phase composed of at least a third plurality of fibers and a fourth plurality of fibers, wherein the air permeability of the first plurality of fibers is greater than the air permeability of the second plurality of fibers and the air permeability of the third plurality of fibers is greater than the air permeability of the fourth plurality of fibers, and comprising a second nanofiber layer. However, the interface between the first phase and the second phase can still become blocked by particles to be removed from the fluid to be filtered.

US 2004/0211160 A1 discloses a multilayer fiber structure comprising a carded nonwoven, which is composed of randomly oriented curled staple fibers comprising a first synthetic staple fiber with a first fiber fineness and at least one second synthetic staple fiber with a second fiber fineness, and that is needled on one side and thermally hardened, and comprising a microfiber mat of thermoplastic polymers produced by a meltblown process wherein the average fiber diameter of the meltblown microfibers decreases across the cross section from the inflow side in the direction of the outflow side. However, such a multilayer fiber structure may still not provide a desired high filter efficiency, in particular for particles having small particle sizes.

However, there remains a need for filter media that provide combinations of desirable filter properties, including a high filtration efficiency and a high particle holding capacity, a high air permeability of the filter medium, a low pressure drop over the filter medium, and/or a long service life.

The object of the invention is to prevent, or at least reduce, the disadvantages of the prior art.

The object is solved by the material for a filter medium according to claim 1.

A material for a filter medium comprising at least a first material layer comprising fibers and having a first surface and a second surface, and comprising a second material layer comprising fibers and having a first surface and a second surface, wherein the first surface of the second material layer is oriented parallel, and preferably adjacent, to the second surface of the first material layer, wherein the first material layer comprising fibers comprises meltblown filaments and fibers having a discrete length, wherein the concentration of meltblown filaments increases from the first surface to the second surface of the first material layer and the concentration of fibers having a discrete length decreases from the first surface to the second surface of the first material layer, and wherein the second material layer comprising fibers comprises nanofibers forming the first surface of the second material layer, enables to collect particles of different dimensions at different depths in the material for a filter medium without blocking, or at least reducing blocking, of the surface of the filter medium by particles.

The term filament is understood to mean a fiber having a length of more than 200 mm, preferably more than 500 mm, more preferably more than 1000 mm. A filament may even be virtually endless, for example when formed by continuous extrusion of a filament through a spinning hole in a spinneret, without cutting the extruded filament into fibers of discrete lengths.

The term staple fiber is understood to mean a fiber having a discrete length in the range of at least 30 mm to 200 mm. The term short cut fiber is understood to refer to a fiber having a discrete length in the range from 2 mm to 30 mm.

A filter element may comprise an inlet for a fluid to be filtered and an outlet for the for a fluid to be filtered and may comprise a filter medium located between the inlet for the fluid to be filtered and the outlet for the fluid to be filtered. In particular the filter medium may be located in a housing comprising the inlet for the fluid to be filtered and the outlet for the fluid to be filtered. The fluid to be filtered will pass through the filter medium in the filter element to obtain a filtered fluid.

The material for a filter medium may advantageously be comprised in a filter medium which can be applied in a filter element, in particular when the first surface of the first material layer comprising fibers is oriented towards the inlet of the filter element and the second surface of the second material layer comprising fibers is oriented towards the outlet of the filter element. The fluid to be filtered may thus enter the filter medium through the first surface of the first material layer comprising fibers and exit the filter medium through the second surface of the second material layer comprising fibers.

The filter medium is able to provide a combination of desirable filter properties. The first surface of the first material layer comprises a higher concentration of fibers having a discrete length than the second surface of the first material layer, and the first surface of the first material layer comprises a lower concentration of meltblown filaments than the second surface of the first material layer, enabling to filter out particles having a relatively large effective dimension by the first material layer without, or at least reducing the risk of, blocking the first material layer by particles having a relatively small effective dimension, as the average size of the openings between the fibers in the first surface of the first material layer is relatively large.

Particles having a relatively small dimension may penetrate through the first surface of the first material layer into the material for a filter medium. However, as the concentration of fibers having a discrete length decreases from the first surface to the second surface of the first material layer and the concentration of meltblown filaments increases from the first surface to the second surface of the first material layer, the average size of the openings between the fibers decreases from the first surface to the second surface of the first material layer. Particles of increasingly smaller dimension are thereby filtered out from the fluid and collected at different depths in the material for a filter medium from the the first surface to the second surface of the first material layer.

The first material layer of the material for a filter medium comprises a mixture of meltblown filaments and fibers having a discrete length, wherein the concentration of meltblown filaments increases from the first surface to the second surface of the first material layer and the concentration of fibers having a discrete length increases from the second surface to the first surface of the first material layer, is preferably configured such that first material layer filters out particles having most penetrating particle size of 200 nm or more, preferably 150 nm or more, or preferably 100 nm or more.

The second material layer comprising nanofibers forming the first surface of the second material layer enables to filter out particles having an even smaller effective dimension from a fluid, preferably at the first surface of the second material layer. The average size of the openings between the fibers in the first surface of the second material layer is smaller than the average size of the openings between the fibers in the second surface of the first material layer.

The second material layer of the material for a filter medium comprises nanofibers forming the first surface of the second material layer is preferably configured such that second material layer filters out particles having most penetrating particle size of 200 nm or less, preferably 150 nm or less, or preferably 100 nm or less.

In an embodiment, the first surface of the second material layer is oriented parallel and directly adjacent to the second surface of the first material layer, which means that material for a filter medium does not comprise a further material layer comprising fibers between the first material layer comprising fibers and the second material layer comprising fibers.

The first material layer comprising fibers in the material for a filter medium comprises a mixture of meltblown filaments and fibers having a discrete length. The first material layer can for example be provided by a meltblowing process extruding a polymer melt into a high velocity stream of hot gas to produce the meltblown filaments and mixing in of fibers having a discrete length into the high velocity stream of hot gas.

The first material layer comprising fibers in the material for a filter medium comprises a mixture of meltblown filaments and fibers having a discrete length. The fibers having a discrete length may constitute at least 50 wt.%, or preferably at least 60 wt.%, or preferably at least 70 wt.%, or preferably at least 80 wt.%, of the total weight of the mixture of meltblown filaments and fibers having a discrete length in the first material layer. The fibers having a discrete length may constitute at most 95 wt.%, or preferably at most 90 wt.%, or preferably at most 85 wt.%, of the total weight of the mixture of meltblown filaments and fibers having a discrete length in the first material layer.

The meltblown filaments may constitute at least 5 wt.%, or preferably at least 10 wt.%, or preferably at least 15 wt.%, of the total weight of the mixture of meltblown filaments and fibers having a discrete length in the first material layer. The meltblown filaments may constitute at most 50 wt.%, or preferably at most 40 wt.%, or preferably at most 30 wt.%, or preferably at most 40 wt.%, of the total weight of the mixture of meltblown filaments and fibers having a discrete length in the first material layer.

The meltblown filaments comprised in the first material layer comprising fibers of the material for a filter medium may comprise, or consist of, any suitable polymer, including a polyolefin polymer, such as a polypropylene, a polyethylene and/or a copolymer of a polyolefin, a polyester polymer, such as a polyethylene terephthalate, a polybutylene terephthalate and/or a copolymer or derivative of a polyester, a polycarbonate and/or a copolymer or derivative of a polycarbonate, a polylactic acid and/or a copolymer or derivative of a polylactic acid, or any mixture or combination thereof.

The first material layer comprising fibers in the material for a filter medium comprises a mixture of meltblown filaments and fibers having a discrete length. The fibers having a discrete length may have any cross-sectional shape, including round, oval, V-shape, trilobal, multilobal or rectangular. A non-round cross-sectional shape enables to provide improved filtration performance due to a higher surface area of the fibers.

The first material layer comprising fibers in the material for a filter medium comprises a mixture of meltblown filaments and fibers having a discrete length. The first material layer comprising fibers may comprise at least 30 g/m², or preferably at least 40 g/m², or preferably at least 50 g/m², or preferably at least 75 g/m², or preferably at least 100 g/m², or preferably at least 125 g/m², of fibers having a discrete length. The first material layer comprising fibers may comprise at most 250 g/m², or preferably at most 200 g/m², or preferably at most 150 g/m², or preferably at most 125 g/m², or preferably at least 100 g/m², or preferably at least 80 g/m², of fibers having a discrete length.

The fibers having a discrete length comprised in the first material layer comprising fibers of the material for a filter medium may comprise, or consist of, any suitable polymer, including a polyolefin polymer, such as a polypropylene, a polyethylene and/or a copolymer of a polyolefin, a polyester polymer, such as a polyethylene terephthalate, a polybutylene terephthalate and/or a copolymer or derivative of a polyester, a polylactic acid and/or a copolymer or derivative of a polylactic acid, or any mixture or combination thereof.

The first material layer comprising fibers may comprise at least 5 g/m², or preferably at least 10 g/m², or preferably at least 15 g/m², or preferably at least 20 g/m² of meltblown filaments.

The weight of the first material layer comprising fibers in the material for a filter medium may be at least 30 g/m², or preferably at least 40 g/m², or preferably at least 50 g/m², or preferably at least 75 g/m².

The weight of the first material layer comprising fibers in the material for a filter medium may be at most 250 g/m², or preferably at most 200 g/m², or preferably at most 150 g/m², or preferably at most 125 g/m², or preferably at most 100 g/m².

The thickness of the material for a filter medium may be varied, depending for example on the application of the material for a filter medium. The thickness of the material for a filter medium may be adjusted by the bonding technique used to consolidate the material for a filter medium.

The thickness of the material for a filter medium may be at least 0.4 mm, or at least 0.6 mm, or at least 0.8 mm, or at least 1.0 mm, or at least 1.5 mm, or at least 2.0 mm. The thickness of the material for a filter medium is determined in accordance with DIN EN ISO 9073-2 (1997). The thickness of the material for a filter medium may be at most 10.0 mm, or at most 8.0 mm, or at most 6.0 mm, or at most 5.0 mm, or at most 4.0 mm, or at most 3.0 mm.

In the material for a filter medium comprising a first material layer comprising fibers comprising a mixture of meltblown filaments and fibers having a discrete length, the concentration of meltblown filaments increases from the first surface to the second surface of the first material layer. The concentration of meltblown filaments may advantageously increase progressively from the first surface to the second surface of the first material layer, which means that the concentration of meltblown filaments increases gradually, i.e. not stepwise, from the first surface to the second surface of the first material layer. With a progressive increase of the concentration of meltblown filaments, a stepwise change in the concentration of meltblown filaments between the first surface and the second surface of the first material layer is prevented. A stepwise change in the concentration of meltblown filaments, would create an interface within the first material layer which can become blocked by particles.

The material for a filter medium comprises a first material layer comprising fibers comprising a mixture of meltblown filaments and fibers having a discrete length, wherein the concentration of fibers having a discrete length increases from the second surface to the first surface of the first material layer. The concentration of fibers having a discrete length may advantageously increase progressively from the second surface to the first surface of the first material layer, which means that the concentration of fibers having a discrete length increases gradually and/or continuously, i.e. not stepwise, from the second surface to the first surface of the first material layer. With a progressive increase of the concentration of fibers having a discrete length, a stepwise change in the concentration of fibers having a discrete length between the first surface and the second surface of the first material layer is prevented. A stepwise change in the concentration of fibers having a discrete length, would create an interface within the first material layer which can become blocked by particles.

The meltblown filaments comprised in the first material layer comprising fibers in the material for a filter medium may have an average diameter of 4 µm or less, or preferably 1 µm or less, or preferably 750 nm or less. The meltblown filaments comprised in the first material layer comprising fibers in the material for a filter medium have an average diameter of more than 500 nm.

The ratio of the average diameter of the fibers having a discrete length comprised in the first material layer comprising fibers in the material for a filter medium over the average diameter of the meltblown filaments comprised in the first material layer comprising fibers in the material for a filter medium is at least 10, or preferably at least 15, or preferably at least 20, or preferably at least 30, or preferably at least 40.

The fibers having a discrete length comprised in the first material layer comprising fibers in the material for a filter medium may have an average diameter of at least 5 µm, or preferably at least 10 µm. The fibers having a discrete length comprised in the first material layer comprising fibers in the material for a filter medium may have an average diameter of at most 75 µm, or preferably at most 50 µm, or preferably at most 40 µm.

The average diameter of a filament or of a fiber is determined by averaging the diameter of 50 filaments or fibers by using a SEM microscope.

The fibers having a discrete length comprised in the first material layer comprising fibers in the material for a filter medium may advantageously have a length of at least 6 mm and at most 40 mm. Processing of fibers having a discrete length of less than 6 mm is difficult. With fibers having a discrete length of more than 40 mm it was found to be very difficult to consistently obtain a first material layer comprising a mixture of meltblown filaments and fibers having a discrete length, wherein the concentration of fibers having a discrete length increases progressively from the second surface to the first surface of the first material layer.

The fibers having a discrete length comprised in the first material layer comprising fibers in the material for a filter medium may comprise crimps or may be straight fibers. In an embodiment, the fibers having a discrete length have at most 15 crimps per cm, or preferably at most 10 crimps per cm, or preferably at most 5 crimps per cm.

The fibers having a discrete length comprised in the first material layer comprising fibers in the material for a filter medium may be staple fibers having a length in the range of at least 30 mm to 200 mm. In an embodiment, the staple fibers have a length in the range of 30 mm to 40 mm.

The fibers having a discrete length comprised in the first material layer comprising fibers in the material for a filter medium may be short cut fibers having a length in the range from 2 mm to 30 mm. In an embodiment, the short cut fibers have a length of at least 6 mm and at most 24 mm, or preferably at least 6 mm and at most 18 mm, enabling to consistently obtain a first material layer comprising a mixture of meltblown filaments and fibers having a discrete length, wherein the concentration of fibers having a discrete length increases progressively from the second surface to the first surface of the first material layer.

The nanofibers comprised in the second material layer comprising fibers in the material for a filter medium have an average diameter of 500 nm or less, or preferably 400 nm or less, or preferably 300 nm or less, or preferably 250 nm or less.

The nanofibers comprised in the second material layer comprising fibers of the material for a filter medium may comprise, or consist of, any suitable polymer, including polyurethane, polyvinylidene fluoride, polyamide, polyetherimide, polyimide, polyacrylnitril, polyvinylalcohol, polyethylenoxide, polyethersulfone, polycaprolactone, Chitosan, polylactide, Collagen, Proteine, and combinations and/or derivates thereof.

In an embodiment, the nanofibers comprised in the second material layer comprising fibers of the material for a filter medium may comprise, or consist of, a polymer which is spinnable from a solvent.

In an embodiment, the material for a filter medium does not contain any glass fibers, which is advantageous for recycling of the material for a filter medium. During processing of a filter medium comprising glass fibers, small glass particles may be broken off the glass fibers, which can be abrasive to the processing equipment and/or to the filter element. Furthermore, the broken off glass particles may have a particle size which is suspected to be carcinogenic.

The first material layer comprising fibers may comprise a low melting polymer having a melting temperature lower than the melting temperature of the meltblown filaments comprised in the first material layer comprising fibers. The melting temperature of a polymer is determined by Differential Scanning Calorimetry (DSC) according to ISO 11357-3. The low melting polymer comprised in the first material layer comprising fibers may advantageously be used to bond the meltblown filaments and/or the fibers having a discrete length to each other, in particular by increasing the temperature to above melting temperature of the low melting polymer, but below the melting temperature of the meltblown filaments, providing sufficient time and/or pressure to allow the molten low melting polymer to come into contact with and/or flow onto the meltblown filaments and/or the fibers having a discrete length, and subsequently reducing the temperature, to solidify the low melting polymer, thereby bonding the meltblown filaments and/or the fibers having a discrete length to each other.

The low melting polymer which may be comprised in the first material layer comprising fibers of the material for a filter medium may be any suitable polymer, including a polyolefin polymer, such as a polypropylene, a polyethylene and/or a copolymer of a polyolefin, a polyester polymer, such as a polyethylene terephthalate, a polybutylene terephthalate and/or a copolymer or derivative of a polyester, a polylactic acid and/or a copolymer or derivative of a polylactic acid, or any mixture or combination thereof, provided that the low melting polymer has a melting temperature lower than the melting temperature of the meltblown filaments comprised in the first material layer comprising fibers.

The low melting polymer may advantageously be comprised in powder-particles comprised in the first material layer comprising fibers. The powder-particles may for example be mixed in into the high velocity stream of hot gas in the meltblowing process, in particular together with fibers having a discrete length. The powder-particles comprising the low melting polymer may also be separately added to the fist material layer comprising fibers.

The low melting polymer may instead or in addition also advantageously be comprised in fibers, preferably in multicomponent fibers, in particular in bicomponent fibers, comprised in the first material layer comprising fibers, which may be selected from bicomponent fibers having a side-by-side configuration, a core-sheath configuration, and/or an islands-in-the-sea configuration.

The material for a filter medium may comprise a first carrier layer having a first surface and a second surface, wherein the first surface of the first carrier layer is oriented parallel, and preferably adjacent, to the second surface of the second material layer. The first carrier layer enables to provide support for the second material layer comprising nanofibers, thereby preventing, or at least reducing, damage of the nanofibers in the second material layer during handling and processing of the material for a filter medium, or during use of a filter medium comprising the material for a filter medium.

In an embodiment, the first surface of the first carrier layer is oriented parallel and directly adjacent to the second surface of the second material layer, which means that material for a filter medium does not comprise a further material layer comprising fibers between the second material layer comprising fibers and the first carrier layer.

The first carrier layer comprised in the material for a filter medium may in principle be any type of nonwoven, such as for example nonwovens comprising fibers having a discrete length, which may be produced by well-known processes, such as carding processes, wet-laid processes or air-laid processes, or any combination thereof.

The first carrier layer comprised in the material for a filter medium may also be a nonwoven comprising filaments, which may be produced by a meltblowing process or by a spunbonding process wherein filaments are extruded from a spinneret and directly laid down on a conveyor belt as a web of filaments and subsequently consolidated, also known as bonding, the web to form a nonwoven, or by a two-step process wherein filaments are spun and wound on bobbins, preferably in the form of multifilament yarns, followed by the step of unwinding the filaments or multifilament yarns and laying the filaments down on a conveyor belt as a web of filaments and consolidating the web to form a nonwoven, or any combination thereof.

The first carrier layer comprised in the material for a filter medium may also comprise a combination of a nonwoven comprising fibers having a discrete length and a nonwoven comprising filaments.

The first carrier layer comprised in the material for a filter medium may preferably comprise a meltblown nonwoven, a spunbond nonwoven, or an assembly comprising a meltblown nonwoven and a spunbond nonwoven. The first carrier layer may consist of a meltblown nonwoven, a spunbond nonwoven, or an assembly consisting of a meltblown nonwoven and a spunbond nonwoven.

The first carrier layer comprised in the material for a filter medium may be composed of a third material layer comprising fibers and having a first surface and a second surface, wherein the third material layer comprising fibers comprises a mixture of meltblown filaments and fibers having a discrete length, wherein the concentration of meltblown filaments increases from the first surface to the second surface of the third material layer and the concentration of fibers having a discrete length decreases from the first surface to the second surface of the third material layer, wherein the second surface of the third material layer is oriented parallel, and preferably adjacent, to the second surface of the second material layer.

In an embodiment, the first surface of the third material layer is oriented parallel and directly adjacent to the second surface of the second material layer, which means that material for a filter medium does not comprise a further material layer comprising fibers between the second material layer comprising fibers and the third material layer.

The first carrier layer may comprise fibers having a discrete length and/or filaments comprising, or consisting of, any suitable polymer, including a polyolefin polymer, such as a polypropylene, a polyethylene and/or a copolymer of a polyolefin, a polyester polymer, such as a polyethylene terephthalate, a polybutylene terephthalate and/or a copolymer or derivative of a polyester, a polylactic acid and/or a copolymer or derivative of a polylactic acid, or any mixture or combination thereof.

The material for a filter medium may comprise a second carrier layer having a first surface and a second surface, wherein the second surface of the second carrier layer is oriented parallel, and preferably adjacent, to the first surface of the first material layer. The second carrier layer enables to provide support for the first material layer comprising a mixture of meltblown filaments and fibers having a discrete length, thereby preventing, or at least reducing, damage of the first material layer during handling and processing of the material for a filter medium, or during use of a filter medium comprising the material for a filter medium.

In an embodiment, the second surface of the second carrier layer is oriented parallel and directly adjacent to the first surface of the first material layer, which means that material for a filter medium does not comprise a further material layer comprising fibers between the second carrier layer and the first material layer comprising fibers.

The second carrier layer comprised in the material for a filter medium may in principle be any type of nonwoven, such as for example nonwovens comprising fibers having a discrete length, which may be produced by well-known processes, such as carding processes, wet-laid processes or air-laid processes, or any combination thereof.

The second carrier layer comprised in the material for a filter medium may also be a nonwoven comprising filaments, which may be produced by a meltblowing process or by a spunbonding process wherein filaments are extruded from a spinneret and directly laid down on a conveyor belt as a web of filaments and subsequently consolidated, also known as bonding, the web to form a nonwoven, or by a two-step process wherein filaments are spun and wound on bobbins, preferably in the form of multifilament yarns, followed by the step of unwinding the filaments or multifilament yarns and laying the filaments down on a conveyor belt as a web of filaments and consolidating the web to form a nonwoven, or any combination thereof.

The second carrier layer comprised in the material for a filter medium may also comprise a combination of a nonwoven comprising fibers having a discrete length and a nonwoven comprising filaments.

The second carrier layer comprised in the material for a filter medium may preferably comprise a meltblown nonwoven, a spunbond nonwoven, or an assembly comprising a meltblown nonwoven and a spunbond nonwoven. The second carrier layer may consist of a meltblown nonwoven, a spunbond nonwoven, or an assembly consisting of a meltblown nonwoven and a spunbond nonwoven.

The second carrier layer may comprise fibers having a discrete length and/or filaments comprising, or consisting of, any suitable polymer, including a polyolefin polymer, such as a polypropylene, a polyethylene and/or a copolymer of a polyolefin, a polyester polymer, such as a polyethylene terephthalate, a polybutylene terephthalate and/or a copolymer or derivative of a polyester, a polylactic acid and/or a copolymer or derivative of a polylactic acid, or any mixture or combination thereof.

The material for a filter medium may comprise a first carrier layer, but exclude a second carrier layer oriented parallel to the first surface of the first material layer. However, the material for a filter medium may advantageously comprise both a first carrier layer and a second carrier layer, as disclosed herein.

In an embodiment, the first surface of the first material layer comprising fibers comprised in the material for a filter medium consists of fibers having a discrete length.

In an embodiment, the second surface of the first material layer comprising fibers comprised in the material for a filter medium consists of meltblown filaments.

In an embodiment, the second material layer consists of nanofibers.

The first material layer comprising fibers and the second material layer comprising fibers comprised in the material for a filter medium may be bonded to each other by any suitable technique. The first material layer comprising fibers and the second material layer comprising fibers comprised in the material for a filter medium may be bonded to each other by applying an adhesive between the second surface of the first material layer and the first surface of the second material layer.

The first material layer comprising fibers and the second material layer comprising fibers comprised in the material for a filter medium may be bonded to each other by applying an ultrasonic bonding process. The ultrasonic bonding process may provide the material for a filter medium with a bonding area of at most 20%, preferably of at most 15%, or preferably of at most 10%, or preferably of at most 5%. A lower bonding area improves the filtration performance.

The first material layer comprising fibers and the second material layer comprising fibers comprised in the material for a filter medium may be bonded to each other by applying a thermal bonding process, such as for example calendaring or through air bonding with a hot fluid, in particular with air. A thermal bonding process is particularly advantageous when the first material layer comprising fibers comprises a low melting polymer having a melting temperature lower than the melting temperature of the meltblown filaments comprised in the first material layer comprising fibers. The thermal bonding process of calendaring may apply a point bonding using a patterned calendar roll to provide the material for a filter medium with a bonding area of at most 20%, preferably of at most 15%, or preferably of at most 10%, or preferably of at most 5%. A lower bonding area improves the filtration performance. The thermal bonding process of calendaring may apply a surface bonding using a smooth calendar roll.

The second material layer comprising nanofibers forming the first surface of the second material layer may be formed directly on the first carrier layer without requiring a separate bonding step.

Alternatively, the second material layer comprising nanofibers forming the first surface of the second material layer may be formed as a separate layer and may be bonded to the first carrier layer by any suitable technique, as disclosed herein above for bonding of the first material layer and the second material layer to each other.

The first material layer comprising a mixture of meltblown filaments and fibers having a discrete length may be formed directly on the second carrier layer without requiring a separate bonding step.

Alternatively, the first material layer comprising a mixture of meltblown filaments and fibers having a discrete length may be formed as a separate layer and may be bonded to the second carrier layer by any suitable technique, as disclosed herein above for bonding of the first material layer and the second material layer to each other.

In an embodiment, a first intermediate product comprising the first carrier layer having a first surface and a second surface, wherein the first surface of the first carrier layer is oriented parallel, and preferably adjacent, to the second surface of the second material layer is provided, as well as a second intermediate product comprising the second carrier layer having a first surface and a second surface, wherein the second surface of the second carrier layer is oriented parallel, and preferably adjacent, to the first surface of the first material layer, and subsequently the second surface of the first material layer and the first surface of the second material layer are bonded to each other by any suitable technique.

The material for a filter medium may be electrostatically charged to further improve the filtration efficiency of a filter medium comprising the material for a filter medium.

The material for a filter medium can advantageously be used in a filter medium in many filtration applications, including, but not limited to, filters for industrial filtration applications, for example for gas turbines, surface treatment, air pollution control or any other industrial filtration application, in filters for clean room applications, in filters for vehicles, such as, but not limited, to busses, trains, subways or other transport systems used by passengers, for cleaning the air, for example in automotive cabin air filters or engine intake filters, in filters for stationary air and/or climate control systems, for example in air purifiers or in heating ventilation and air conditioning (HVAC) systems, in filters for vacuum cleaners, in liquid filter systems, or in other higher efficiency filter systems.

The material for a filter medium may also advantageously be used in combination with activated carbon or any other structure for the adsorption of gases (combifilter) in similar applications as disclosed herein above.

A filter medium can advantageously be provided comprising the material for a filter medium as described herein. In an embodiment, the filter medium may consist of the material for a filter medium as described herein.

The filter medium comprising the material for a filter medium as described herein may be a pleated filter medium. The pleats in the pleated filter medium may have a height of at least 10 mm, preferably at least 20 mm, or preferably at least 30 mm, preferably at least 40 mm, or preferably at least 50 mm. The pleats in the pleated filter medium may have a height of at most 300 mm, preferably at most 250 mm, or preferably at most 200 mm, or preferably at most 150 mm, or preferably at most 100 mm.

The filter medium may have a filter performance, i.e. the percentage of all particles filtered out by the filter medium, of at least 80%, preferably of at least 90%, or preferably of at least 99%, or preferably of at least 99.995%, tested at the most penetration particle size with a test aerosol and velocity which is typical for the various applications disclosed herein above.

A filter element can advantageously be provided comprising an inlet for a fluid to be filtered and an outlet for the for a fluid to be filtered and comprising the filter medium as described herein. In particular the filter medium may be located in a housing comprising the inlet for the fluid to be filtered and the outlet for the fluid to be filtered. The fluid to be filtered will pass through the filter medium in the filter element to obtain a filtered fluid. The fluid to be filtered may be a gas, in particular air.

In an embodiment of the filter element, the first surface of the first material layer comprising fibers is preferably oriented towards the inlet of the filter element and the second surface of the second material layer comprising fibers is preferably oriented towards the outlet of the filter element.

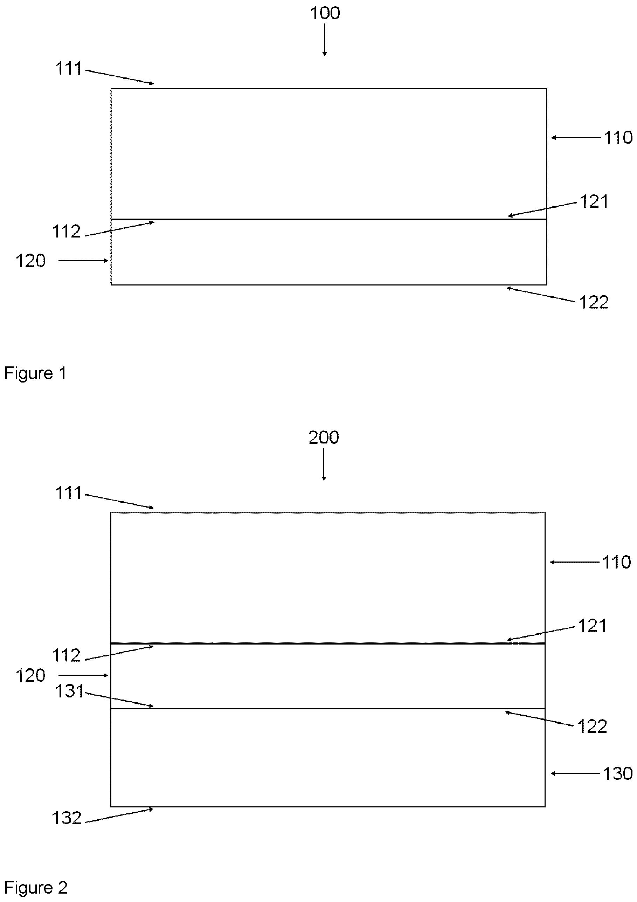

Figure 1 schematically depicts a material for a filter medium according to an embodiment of the invention. The material for a filter medium (100) comprises a first material layer (110) comprising fibers and having a first surface (111) and a second surface (112). The material for a filter medium (100) comprises also a second material layer (120) comprising fibers and having a first surface (121) and a second surface (122). The first surface (121) of the second material layer (120) is oriented parallel and adjacent to the second surface (112) of the first material layer (110). The first material layer (110) comprises a mixture of meltblown filaments and fibers having a discrete length, wherein the concentration of meltblown filaments increases from the first surface (111) to the second surface (112) of the first material layer (110) and the concentration of fibers having a discrete length increases from the second surface (112) to the first surface (111) of the first material layer (110). The second material layer (120) comprises nanofibers forming the first surface (121) of the second material layer (120).

Figure 2 schematically depicts a material for a filter medium according to another embodiment of the invention. The material for a filter medium (200) comprises a first material layer (110) comprising fibers and having a first surface (111) and a second surface (112). The material for a filter medium (100) comprises also a second material layer (120) comprising fibers and having a first surface (121) and a second surface (122). The first surface (121) of the second material layer (120) is oriented parallel and adjacent to the second surface (112) of the first material layer (110). The first material layer (110) comprises a mixture of meltblown filaments and fibers having a discrete length, wherein the concentration of meltblown filaments increases from the first surface (111) to the second surface (112) of the first material layer (110) and the concentration of fibers having a discrete length increases from the second surface (112) to the first surface (111) of the first material layer (110). The second material layer (120) comprises nanofibers forming the first surface (121) of the second material layer (120). The material for a filter medium (200) further comprises a first carrier layer (130) having a first surface (131) and a second surface (132), wherein the first surface (131) of the first carrier layer (130) is oriented parallel and adjacent to the second surface (122) of the second material layer (120).

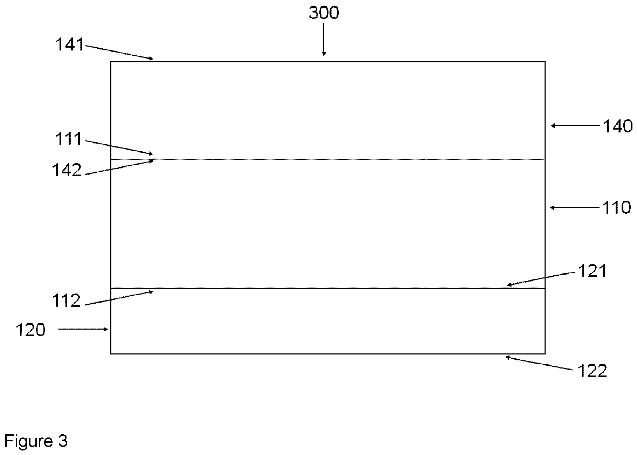

Figure 3 schematically depicts a material for a filter medium according to another embodiment of the invention. The material for a filter medium (300) comprises a first material layer (110) comprising fibers and having a first surface (111) and a second surface (112). The material for a filter medium (100) comprises also a second material layer (120) comprising fibers and having a first surface (121) and a second surface (122). The first surface (121) of the second material layer (120) is oriented parallel and adjacent to the second surface (112) of the first material layer (110). The first material layer (110) comprises a mixture of meltblown filaments and fibers having a discrete length, wherein the concentration of meltblown filaments increases from the first surface (111) to the second surface (112) of the first material layer (110) and the concentration of fibers having a discrete length increases from the second surface (112) to the first surface (111) of the first material layer (110). The second material layer (120) comprises nanofibers forming the first surface (121) of the second material layer (120). The material for a filter medium (200) further comprises a second carrier layer (140) having a first surface (141) and a second surface (142), wherein the second surface (142) of the second carrier layer (140) is oriented parallel and adjacent to the first surface (111) of the first material layer (110).

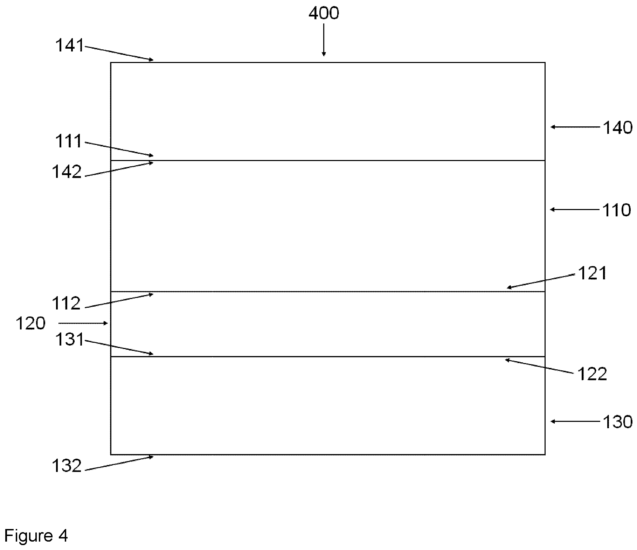

Figure 4 schematically depicts a material for a filter medium according to another embodiment of the invention. The material for a filter medium (400) comprises a first material layer (110) comprising fibers and having a first surface (111) and a second surface (112). The material for a filter medium (100) comprises also a second material layer (120) comprising fibers and having a first surface (121) and a second surface (122). The first surface (121) of the second material layer (120) is oriented parallel and adjacent to the second surface (112) of the first material layer (110). The first material layer (110) comprises a mixture of meltblown filaments and fibers having a discrete length, wherein the concentration of meltblown filaments increases from the first surface (111) to the second surface (112) of the first material layer (110) and the concentration of fibers having a discrete length increases from the second surface (112) to the first surface (111) of the first material layer (110). The second material layer (120) comprises nanofibers forming the first surface (121) of the second material layer (120). The material for a filter medium (200) further comprises a first carrier layer (130) having a first surface (131) and a second surface (132), wherein the first surface (131) of the first carrier layer (130) is oriented parallel and adjacent to the second surface (122) of the second material layer (120). The material for a filter medium (200) further comprises a second carrier layer (140) having a first surface (141) and a second surface (142), wherein the second surface (142) of the second carrier layer (140) is oriented parallel and adjacent to the first surface (111) of the first material layer (110).

### Example 1

A filter medium was provided having a weight of 169 g/m² comprising a first material layer comprising fibers and having a first surface and a second surface and comprising a second material layer comprising fibers and having a first surface and a second surface. The first surface of the second material layer is oriented parallel and adjacent to the second surface of the first material layer.

The first material layer comprises a mixture of meltblown filaments and fibers having a discrete length, wherein the concentration of meltblown filaments increases from the first surface to the second surface of the first material layer and the concentration of fibers having a discrete length increases from the second surface to the first surface of the first material layer. The first material layer has a weight of 80 g/m².

The second material layer consists of nanofibers and has a weight of 89 g/m².

### Comparative Example 1

A filter medium was provided consisting of nanofibers and having a weight of 89 g/m², identical to the second material layer of example 1.

### Comparative Example 2

A filter medium was provided having a weight of 80 g/m² comprising a material layer comprising fibers and having a first surface and a second surface. The material layer comprises a mixture of meltblown filaments and fibers having a discrete length, wherein the concentration of meltblown filaments increases from the first surface to the second surface of the first material layer and the concentration of fibers having a discrete length increases from the second surface to the first surface of the first material layer, identical to the first material layer of example 1.

Filter media of the examples were tested for filtration of NaCl particles from an air flow. An air volume flow of 95 l/min was applied onto a filter medium having a surface area of 0.01 m², providing an incoming air flow velocity of 15.83 cm/s.

The initial penetration of the filter medium of example 1 was 12%, while the initial penetration of the filter medium of the comparative example 1 was 41% and the initial penetration of the filter medium of the comparative example 2 was 28%.

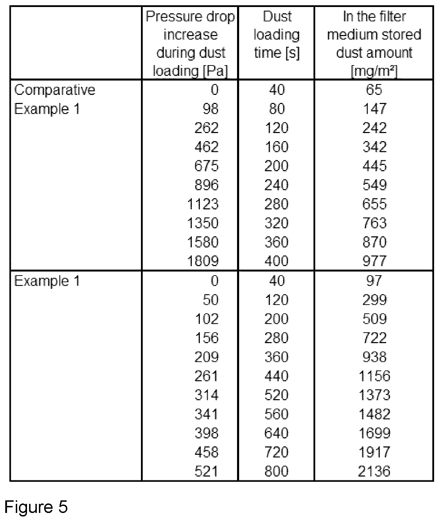

In the table of Figure 5 the increase in pressure drop during dust loading, the dust loading time, and the dust amount stored in the filter medium is summarized for example 1 and comparative example 1.

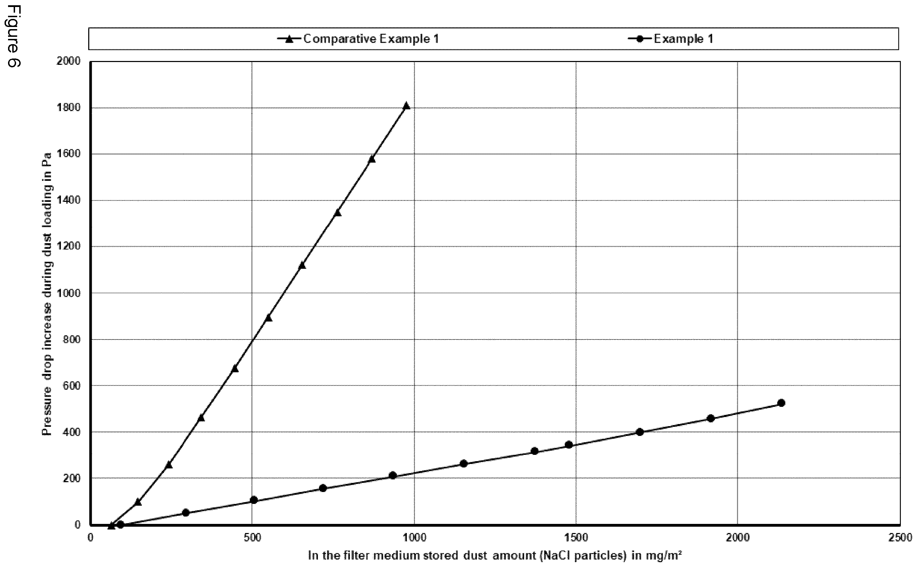

Figure 6 shows the increase in pressure drop during dust loading in relation to the dust amount stored in the filter medium for example 1 and comparative example 1.

The filter medium according to the invention enables to obtain a lower increase in pressure drop during dust loading as compared to the comparative example. Also, the dust loading time can be increased for filter medium according to the invention as compared to the comparative example. Furthermore, the dust amount stored in the filter medium according to the invention has increased as compared to the comparative example.

## Claims

1. A material for a filter medium (100, 200) comprising at least a first material layer (110) comprising fibers and having a first surface (111) and a second surface (112), and comprising a second material layer (120) comprising fibers and having a first surface (121) and a second surface (122), wherein the first surface (121) of the second material layer (120) is oriented parallel, and preferably adjacent, to the second surface (112) of the first material layer (110), wherein the first material layer (110) comprises a mixture of meltblown filaments and fibers having a discrete length, wherein the concentration of meltblown filaments increases from the first surface (111) to the second surface (112) of the first material layer (110) and the concentration of fibers having a discrete length increases from the second surface (112) to the first surface (111) of the first material layer (110), and wherein the second material layer (120) comprises nanofibers forming the first surface (121) of the second material layer (120).

2. The material for a filter medium (100, 200) according to claim 1, wherein the concentration of meltblown filaments increases progressively from the first surface (111) to the second surface (112) of the first material layer (110).

3. The material for a filter medium (100, 200) according to any one or more of the previous claims, wherein the concentration of fibers having a discrete length increases progressively from the second surface (112) to the first surface (111) of the first material layer (110).

4. The material for a filter medium (100, 200) according to any one or more of the previous claims, wherein the meltblown filaments comprised in the first material layer (110) have an average diameter of 4 µm or less, preferably 2 µm or less, more preferably 1 µm or less, even more preferably 750 nm or less.

5. The material for a filter medium (100, 200) according to any one or more of the previous claims, wherein the ratio of the average diameter of the fibers having a discrete length comprised in the first material layer (110) over the average diameter of the meltblown filaments comprised in the first material layer (110) is at least 10, or preferably at least 15, or preferably at least 20, or preferably at least 30, or preferably at least 40.

6. The material for a filter medium (100, 200) according to any one or more of the previous claims, wherein the nanofibers comprised in the second material layer (120) have an average diameter of 500 nm or less, or preferably 400 nm or less, or preferably 300 nm or less, or preferably 250 nm or less.

7. The material for a filter medium (100, 200) according to any one or more of the previous claims, wherein the fibers having a discrete length comprised in the first material layer (110) have a length of at least 6 mm and at most 40 mm, or preferably at least 6 mm and at most 24 mm, or preferably at least 6 mm and at most 18 mm.

8. The material for a filter medium (100, 200) according to any one or more of the previous claims, wherein the first material layer (110) comprises a low melting polymer having a melting temperature lower than the melting temperature of the meltblown filaments.

9. The material for a filter medium (100, 200) according to claim 8, wherein the low melting polymer is comprised in powder-particles and/or in fibers, preferably in bicomponent fibers.

10. The material for a filter medium (200) according to any one or more of the previous claims, wherein the material for a filter medium (200) comprises a carrier layer (130) having a first surface (131) and a second surface (132), wherein the first surface (131) of the carrier layer (130) is oriented parallel, and preferably adjacent, to the second surface (122) of the second material layer (120).

11. The material for a filter medium (200) according to claim 10, wherein the first carrier layer (130) is composed of a third material layer (130) comprising fibers and having a first surface (131) and a second surface (132), wherein the third material layer (130) comprising fibers comprises a mixture of meltblown filaments and fibers having a discrete length, wherein the concentration of meltblown filaments increases from the first surface (131) to the second surface (132) of the third material layer (130) and the concentration of fibers having a discrete length decreases from the first surface (131) to the second surface (132) of the third material layer (130), wherein the second surface (132) of the third material layer (130) is oriented parallel, and preferably adjacent, to the second surface (122) of the second material layer (120).

12. The material for a filter medium (100, 200) according to any one or more of the previous claims, wherein the first surface (111) of the first material layer (110) comprising fibers consists of fibers having a discrete length.

13. The material for a filter medium (100, 200) according to any one or more of the previous claims, wherein the second surface (112) of the first material layer (110) comprising fibers consists of meltblown filaments.

14. A filter medium comprising the material for a filter medium (100, 200) according to any one or more of the previous claims.

15. A filter element comprising an inlet for a fluid to be filtered and an outlet for the for a fluid to be filtered, and comprising a filter medium according to claim 14 or the material for a filter medium according to any one or more of claims 1 to 13, wherein the first surface (111) of the first material layer (110) comprising fibers is preferably oriented towards the inlet of the filter element and the second surface (122) of the second material layer comprising fibers (120) is oriented towards the outlet of the filter element.
